# EUROPÄISCHE PATENTSCHRIFT

(11) **EP 2 459 941 B1**
(45) Veröffentlichungstag und Bekanntmachung des Hinweises auf die Patenterteilung: **13.04.2016**
(21) Anmeldenummer: 10737556.0
(22) Anmeldetag: 26.07.2010
(51) Int. Cl.: F24J 2/48

(54) **SOLARKOLLEKTOR UND VERFAHREN ZUR HERSTELLUNG EINER LICHTABSORBIERENDEN OBERFLÄCHE**
SOLAR COLLECTOR AND METHOD FOR PRODUCING A LIGHT-ABSORBING SURFACE
COLLECTEUR SOLAIRE ET PROCÉDÉ DE FABRICATION D UNE SURFACE ABSORBANT LA LUMIÈRE

(30) Priorität: 29.07.2009 DE 102009035238
(43) Veröffentlichungstag der Anmeldung: 06.06.2012
(73) Patentinhaber: MAHLE Behr GmbH & Co. KG, 70469 Stuttgart (DE)
(72) Erfinder: ENGLERT, Peter, 74177 Bad Friedrichshall (DE)
(74) Vertreter: Grauel, Andreas
(86) Internationale Anmeldenummer: PCT/EP2010/060816
(87) Internationale Veröffentlichungsnummer: WO 2011/012583

(56) Entgegenhaltungen:
- EP-A1- 2 230 112
- WO-A1-2008/055496
- WO-A1-2008/129133
- WO-A2-2007/121252
- DE-A1-102006 039 804
- DE-U1-202005 006 478

## Beschreibung

Die vorliegende Erfindung bezieht sich auf einen Solarkollektor, ein Verfahren zur Herstellung eines Solarkollektors und auf eine Verwendung einer Oberfläche zur Lichtabsorption eines Solarkollektors oder zur Wärmeabstrahlung.

Thermische Solaranlagen, zum Beispiel zur Warmwasseraufbereitung werden heute mit Absorbern ausgestattet, deren Oberflächen mit Lackierungen oder galvanischen Beschichtung schwarz gefärbt sind. Solche als Absorber dienende Schichten müssen heute mit verschiedenen Verfahren wie Lackieren oder Galvanische Beschichtungen nachträglich auf einen Sonnenkollektor aufgebracht werden. Diese Absorber werden mit einem Kühlmittel zur Abfuhr der Wärme umströmt.

Somit sind nachträgliche, zusätzliche und umweltbelastende Applikationsverfahren (z.B. Chromatierung) mit Chemikalien oder Polymeren auf Wärmeübertragungsoberflächen erforderlich. Beschichtungen mit Polymeren im Sonnenlicht sind auf Dauer unbeständig, so dass es zu Wirkungsgradverlusten kommt Auch muss die Wärmeenergie die Grenzflächen zwischen Beschichtung und metallischer Wärmetauscheroberfläche überwinden.

Die DE 103 61 910 B3 befasst sich mit einem Verfahren zur lackfreien Schwärzung der Oberflächen von Bauteilen, bestehend aus hochsiliziumhaltigen Aluminiumwerkstoffen, bei dem zunächst mittels verschiedener Methoden die Oberfläche vorbereitet wird. Nach einem Spülvorgang erhält man die Schwärzung durch eine Behandlung in einer wässrigen Aktivlösung, die Zinksulfat, Ethylendiamin und Ammoniummolybdat enthält.

Die DE 10 2004 031 034 A1 beschreibt ein Flussmittel zum Löten von Bauteilen. Dabei soll bereits beim Löten eine oder mehrere spezifische Oberflächeneigenschaften erzeugt werden. Damit werden korrosionsbeständige, hydrophile oder haftende Oberflächen sowie ein dekoratives Aussehen ermöglicht.

Das Dokument DE 10 2006 039 804 B4 offenbart ein Verfahren zur Herstellung eines Absorberblechs für einen Sonnenkollektor aus einem Band aus Metall, insbesondere Aluminium oder einer Aluminiumlegierung, bei welchem das Band unter Verwendung eines Coil-Coating-Beschichtungsverfahrens mit einer hochselektiven Beschichtung lackiert wird, welche eine gute Absorption für Sonnenlicht aufweist und eine geringe Wärmeabstrahlung gewährleistet. Dabei wird die hochselektive Beschichtung mittels einer Lackierwalze aufgetragen und eine Mehrzahl funktioneller Schichten werden unter Verwendung der Lackierwalze aufgetragen, wobei die funktionelle Beschichtung eine Haftvermittlerschicht oder eine Primärschicht aufweist und eine auf Sol-Gel-basis basierende Absorptionsschicht mit Nanopartikeln aufweist.

Das Dokument WO 2008/055496 A1 zeigt ein Verfahren zur Herstellung dünner Schichten von Metall-Keramik-Verbundwerkstoffen, die Nano-Teilchen enthalten. Eine mögliche Anwendung für dieses Verfahren ist die Beschichtung eines Solarabsorbers mit einer Cermet-basierten selektiv absorbierenden Oberflächenschicht, welche sehr einfach, zuverlässig und kostengünstig herzustellen ist und gute Spektralselektivität aufweist. In dem Verfahren werden eine oder mehrere dunne Cermet-Schichten mittels Tauchen metallischer Substrate in eine stabile wässrige oder organische Suspension auf dem Substrat abgeschieden. Die Suspension besteht aus alkoholischer oder wässriger Lösung, in der keramische Nano-Pulvern dlspergiert sind. In der Lösung befindet sich der metallische Anteil des Cermets als Metall-Ionen.

Das Dokument WO 2008/129133 A1 offenbart ein Glas, welches eine erste und eine zweite Oberfläche aufweist, wobei das Glas ein Sonnenenergie absorbierende Element aufweist, die durch eine erste Schicht, die unmittelbar unterhalb der ersten Oberfläche angeordnet ist. Die Schicht wird durch Flammspritzen hergestellt und enthält Nanopartikel.

Es ist die Aufgabe der vorliegenden Erfindung einen verbesserten Solarkollektor, ein verbessertes Verfahren zur Herstellung einer lichtabsorbierenden Oberfläche und auf eine Verwendung einer Oberfläche zur Lichtabsorption oder zur Wärmeabstrahlung zu schaffen.

Diese Aufgabe wird durch einen Solarkollektor gemäß Anspruch 1, ein Verfahren zur Herstellung eines Solarkollektors mit einer lichtabsorbierenden Oberfläche gemäß Anspruch 7 sowie eine Verwendung einer Oberfläche zur Lichtabsorption eines Solarkollektors oder zur Wärmeabstrahlung gemäß Anspruch 16.

Der vorliegenden Erfindung liegt die Erkenntnis zugrunde, dass mit einem Controlled Atmosphare Brazing (CAB) Lötprozess zum Hartlöten von Aluminiumwärmeübertragern während des Lötprozesses schwarze Oberflächen erzeugt werden können.

Der Zusatz von Titandioxid-Nanopartikeln zum Flussmittel führt auf Aluminiumoberflächen nach der Lötung zu einer dunklen Einfärbung. Diese Dunkel-Verfärbung wird unter Bezeichnung Blackbraze zur optischen Schwärzung von Kühler herangezogen um eine schwarze Lackierung einzusparen.

Effiziente Wärmeübertrager, wie beispielsweise Aluminiumwärmeübertrager oder Wärmeübertrager aus anderen Metallen, können mit einer stark lichtabsorbierenden Oberfläche ausgestattet und in der Solarenergietechnik eingesetzt werden. Dies ermöglicht eine vorteilhafte Art der Herstellung eines Sonnenkollelctors.

Die vorliegende Erfindung schafft einen Solarkollektor mit einer lichtabsorbierenden Oberfläche, mit folgenden Merkmale: einem Grundmaterial mit einer Oberfläche; einer nanostrukturierten Schicht, die in eine Gesamtfläche der Oberfläche integriert ist, um die lichtabsorbierende Oberfläche auszubilden, wobei die nanostrukturierte Schicht aus Nanopartikel eines anorganischen Materials besteht. Über die lichtabsorbierende Oberfläche kann beispielsweise Sonnenenergie, also Licht und lnfrarotstrahlung absorbiert werden. Der Solarkollektor kann einen Kühlmittelkanal aufweisen, durch den ein Kühlmittel strömen kann. Die Absorption der Sonnenenergie kann zu einer Erwärmung des Grundmaterials und des Kühlmittels führen.

Nanopartikel haben im Verhältnis zu ihrem Volumen eine riesige Oberfläche. Das heißt, dass bei ihnen weit mehr Atome an der Oberfläche liegen als bei größeren Körpern. So können sie mit ihrer Umgebung wesentlich besser in chemische und physikalische Wechselwirkung treten.

(Aluminium)-Oberflächen lassen sich bei Zusatz von Titandioxid Nanopartikel im Nocolok Flussmittel nach dem CAB-Lötprozess intensiv schwarz färben. Eine Oberflächenanalytische (ESCA)- Untersuchung zeigt, dass es sich bei der im Lötprozess gebildeten schwarzen Oberfläche auch um das nach Literatur stark lichtabsorbierende Titanoxonitrid handelt.

Diese, die schwarze Oberfläche bildende Schicht ist nanostrukturiert und in die Oberfläche des Aluminium-Grundwerkstoffs bzw. des Werkstoffs der Oberfläche aus Metall oder Glas selbst eingebettet. Die matten Oberflächen zeigen eine starke Absorption von Licht und auch von Infrarot-Strahlung. Solche Oberflächen sind deshalb auch ideale schwarze Strahler und damit für Wärmeabstrahlung speziell im Weltraum einsetzbar. Der Energieübergang ist aufgrund der reduzierten Grenzfläche zwischen Wärmetauscher und Absorptionsschicht hoch effizient.

Erfindungsgemäß kann das anorganische Material der Nanopartikel einen größeren Wärmeabsorptionsgrad als das Grundmaterial aufweisen. Das anorganische Material umfasst dabei Titandioxid. Das Grundmaterial kann Aluminium, Metall oder Glas umfassen.

Die vorliegende Erfindung schafft ferner ein Verfahren zur Herstellung einer lichtabsorbierenden Oberfläche, das die folgenden Schritte umfasst: Bereitstellen eines Grundmaterials mit einer Oberfläche; Beschichten der Oberfläche mit einer Schicht aus Nanopartikeln eines anorganischen Materials; und Erhitzen der Oberfläche, so dass die Schicht aus Nanopartikeln eine nanostrukturierte Schicht ausbildet, die in die Oberfläche integriert ist, um die lichtabsorbierende Oberfläche auszubilden. Das erfindungsgemäße Verfahren Wird eingesetzt um die lichtabsorbierende Oberfläche des erfindungsgemäßen Solarkollektors herzustellen.

Beispielsweise kann die Schicht aus Nanopartikeln auf die Oberfläche aufgespritzt werden. Dazu können die Nanopartikel in einer Lösung vorlieben. Alternativ kann die Lösung auf andere geeignete Weise auf die Oberfläche aufgebracht werden.

Das Erhitzen der Oberfläche kann durch einen Erhitzungs- oder Lötprozess erfolgen. Dabei kann es sich um Hartlöten handeln. Insbesondere ist ein CAB-Lötverfahren geeignet.

Erfindungsgemäß kann das Grundmaterial aus Aluminium, Glas oder Metall bestehen. Die Schicht aus Nanopartikeln umfasst Titandioxid Nanopartikel. Ferner enthält die Schicht aus Nanopartikeln ein Lötflussmittel auf der Basis von Kaliumfluoroaluminaten und kann ein Bindemittel und ein Thixotrophiermittel umfassen. Insbesondere kann die Schicht aus Nanopartikeln ein Controlled Atmosphare Brazing Flussmittel, eine Nanotitandioxid Suspension, eine Polyurethan-Bindemittel Suspension, eine. Polyurethan-Verdicker Suspension und vollentionisiertes-Wasser umfassen. Beispielsweise kann die Schicht aus Nanopartikeln dabei zu 25-40 % das CAB-Flussmittel, zu 10-20 % die Nanotitandioxid Suspension, zu 5-20% die PU-Bindemittel Suspension und zu 1-10 % die PU-Verdicker Suspension und zu 30-45% das vollentionisierte Wasser umfassen. Bei den Prozentangaben kann es sich um Vol.-% handeln.

Die vorliegende Erfindung schafft ferner eine Verwendung einer Oberfläche, in die eine nanostrukturierte Schicht aus Nanopartikeln, eines anorganischen Materials integriert ist, zur Lichtabsorption eines Solarkollektors oder zur Wärmeabstrahlung, wobei die Oberfläche gemäß dem erfindungsgemäßen Verfahren hergestellt wird.

Insgesamt kann bei in dieser Anmeldung erwähntem Aluminiummaterial auch ein anderes Metall oder Glas verwendet werden, ohne dass es einer weiteren expliziten Erwähnung bedarf. Statt des Lötverfahrens kann auch ein entsprechendes Erhitzungsverfahren verwendbar sein, ohne dass Teile miteinander durch Löten verbunden werden müssen. Entsprechend muss nicht zwingend ein Lötofen eingesetzt werden, sondern es kann alternativ auch ein Hochtemperaturofen ggf. mit Schutzgasatmosphäre eingesetzt werden, ohne dass es einer weiteren expliziten Erwähnung bedarf.

Vorteilhafte Ausführungsbeispiele der vorliegenden Erfindung werden nachfolgend Bezug nehmend auf die beiliegenden Zeichnungen näher erläutert. Es zeigen:
- Fig. 1: eine schematische Darstellung eines erfindungsgemäßen Solarkollektors; und
- Fig. 2: ein Ablaufdiagramm eines erfindungsgemäßen Verfahrens.

In der nachfolgenden Beschreibung der bevorzugten Ausführungsbeispiele der vorliegenden Erfindung werden für die in den verschiedenen Zeichnungen dargestellten und ähnlich wirkenden Elemente gleiche oder ähnliche Bezugszeichen verwendet wobei eine wiederholte Beschreibung dieser Elemente weggelassen wird.

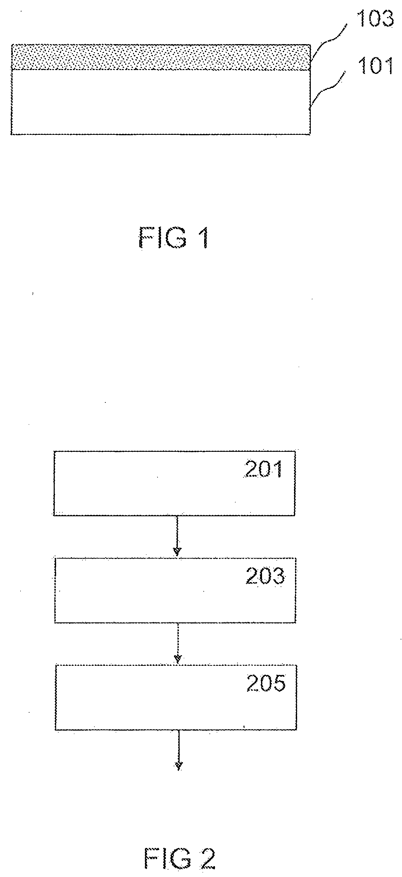

Fig. 1 zeigt eine schematische Darstellung eines Solarkollektors mit einem Grundmaterial 101 und einer lichtabsorbierenden Oberfläche 103, gemäß einem Ausführungsbeispiel der vorliegenden Erfindung. Die lichtabsorbierende Oberfläche 103 ist in das Grundmaterial integriert. Die lichtabsorbierende Oberfläche ist nanostrukturiert. Somit können in die Oberfläche des Grundmaterials 101 flächendeckend Titandioxid Nanopartikel gebettet sein.

Der Sonnenkollektor kann als ein dünnwandiger Wärmeübertrager ausgebildet sein, bei dem als Grundmaterial 101 Aluminium eingesetzt wird.

Als Nanopartikel wird Titandioxid verwendet Schwarze Titanverbindungen haben als Absorber im Vergleich zu anderen Materialien den höchsten Absorptionsgrad. So weist Ti₂O₂N im sichtbaren Bereich die Werte A_{λ} = 0.95, T_{λ} = 0, R_{λ} = 0,05 und im infrarot Bereich die Werte A_{λ} = 0,05, T_{λ} = 0, R_{λ} = 0,95 auf. Im Vergleich dazu weist Schwarznickel im sichtbaren Bereich die Werte A_{λ} = 0,88, T_{λ} = 0, R_{λ} = 0,12 und im infrarot Bereich die Werte A_{λ} = 0,07, T_{λ} = 0, R_{λ} = 0,93, Schwarzchrom im sichtbaren Bereich die Werte A_{λ} = 0,87, T_{λ} = 0, R_{λ} = 0,13 und im infrarot Bereich die Werte A_{λ} = 0,09, T_{λ} = 0, R_{λ} = 0,91 und Aluminiumgitter im sichtbaren Bereich die Werte A_{λ} = 0,70, T_{λ} = 0, R_{λ} = 0,30 und im infrarot Bereich die Werte A_{λ} = 0,07, T_{λ} = 0, R_{λ} = 0,93 auf.

Fig. 2 zeigt ein Ablaufdiagramm eines Verfahrens zur Herstellung einer lichtabsorbierenden Oberfläche eines Solarkollektors gemäß einem Ausführungsbeispiel der vorliegenden Erfindung. In einem ersten Schritt erfolgt ein Bereitstellen eines Grundmaterials mit einer Oberfläche. Dabei kann es sich um einen Aluminiumwänneübertrager handeln. Bei der Oberfläche kann es sich um diejenige Fläche handeln, die im späteren Einsatz als Absorptionsfläche für eine Sonneneinstrahlung vorgesehen ist. Nachfolgend erfolgt in einem Schritt 203 ein Beschichten der Oberfläche mit einer Schicht aus Nanopartikeln eines anorganischen Materials. Dazu kann beispielsweise eine Lösung, die die Nanopartikel umfasst, auf die Oberfläche aufgetragen werden. Um die Nanopartikel in die Oberfläche einzubinden, erfolgt in einem Schritt 205 ein Erhitzen der Oberfläche. Auf diese Weise kann die Schicht aus Nanopartikeln mit der Oberfläche zusammenwirken und eine nanostrukturierte, lichtabsorbierende Oberfläche ausbilden. Das Erhitzen kann in einem Hartlötprozess erfolgen.

Auf diese Weise muss beispielsweise eine stark lichtabsorbierende Beschichtung auf Basis von Titan und/oder Titan-Verbindungen nicht nachträglich auf der Oberfläche aufgebracht werden, sondern kann während der Herstellung (Lötung) des Aluminiumwärmetauschers "in situ" in den obersten Schichten des Aluminiumgrundwerkstoffes generiert werden. Dadurch erfolgt die Lichtabsorbtion direkt in den obersten Aluminiumschichten selbst und wird somit schneller und effizienter an ein Kühlfluid abgegeben.

Erfindungsgemäß wird zur Herstellung einer lichtabsorbierennen Aluminiumoberfläche, der Aluminiumwärmeübertrager für die Solartechnik vor dem Lötprozess mit einer Suspension von (Nocolok)-CAB-Flussmittel eingesprüht, der ein bestimmter Prozentsatz an Titandioxid Nanopartikel zugesetzt ist. Weiterhin enthält diese Suspension ein Bindemittel und ein Thixolrophiermittel um die Feststoffe der Suspension auf der Oberfläche zu fixieren bis die Reaktionstemperatur im CAB- Lötofen erreicht wird.

Bei Erreichen der Reaktionstemperatur kommt es mit der Aluminiumoberfläche, der Stickstoffatmosphäre und den Nanotitandioxidpartikeln zu einer chemischen Reaktion wobei dann schwarze Titanverbindungen entstehen, die dann in die aufschmelzende Aluminium-Oberfläche mit dem (Nocolok)Flussmmittel eingebaut werden.

Es kann so eine sehr intensiv schwarze und matte anorganische Oberfläche erzeugt werde, weiche das Licht stark absorbiert.

Dem (Nocolok) CAB- Flussmittel werden hier bevorzugt 11-20% Titannanopartikel bezogen auf den Feststoff zugesetzt.

Ein bevorzugtes Rezept für Aluminiumoberfiächen mit Lotplattierung umfasst, 32,0% CAB Flussmittel, 15,0 % Nanotitandioxid Suspension, 12,0 % Polyurethan (PU) -Bindemittel Suspension, 5,0 % PU- Verdicker Suspension und 36,0 % vollentionisiertes (VE) - Wasser.

Das- Erhitzen der Oberfläche kann beim Hartlöten von Einzelteilen für Wärmetauscher erfolgen, so dass kein zusätzlicher Arbeitsschritt zur Erwärmung erforderlich ist. Als Grundmaterial der Wärmetaucher können Aluminium oder Aluminiumlegierungen eingesetzt werden. Als Lötverfahren wird das so genannte "Nocolok"-Löten verwendet, bei dem ein Flussmittel auf der Basis von Kaliumfluoroaluminaten mit der Summenformel K₁₋₃AlF₄₋₈ verwendet wird, das im Handel unter der Bezeichnung "Nocolok" erhältlich ist. Dieses "Nocolow'-Flussmittel verbleibt nach dem Löten auf der Oberfläche und kann sie mit einer kristallinen Schicht überziehen.

Die lichtabsorbierende Oberfläche kann als Komponente elementares Ti sowie Ti in einem Bindungszustand, beispielsweise TiO und/oder Nitrid umfassen. Außerdem kann die Oberfläche Anteile von Ti in vierwertiger Form und Verbindungen wie K₂TiF₆ umfassen. Dabei kann Ti im Oberflächenbereich nicht nachweisbar sein, sondern erst nach 60 Min Argonionenätzen, entsprechend einem Abtrag von ca. 280 nm Si02 Äquivalentschichtdicke.

Die beschriebenen Ausführungsbeispiele sind nur beispielhaft gewählt und können miteinander kombiniert werden.

## Patentansprüche

1. Solarkollektor mit einer lichtabsorbierenden Oberfläche, mit folgenden Merkmalen:
einem Grundmaterial (101) mit einer Oberfläche;
einer nanostrukturierten Schicht (103), die in eine Gesamtfläche der Oberfläche des Grundmaterials (101) integriert ist, um die lichtabsorbierende Oberfläche auszubilden, wobei die nanostrukturierte Schicht (103) ein Fussmittel welchem Titandioxid Nanopartikel zugesetzt sind, aufweist, wobei das Flussmittel Kaliumfluoroaluminate, insbesondere K₁₋₃AlF₄₋₈ aufweist.

2. Solarkollektor gemäß Anspruch 1, wobei das Titandioxid einen größeren Wärmeabsorptionsgrad als das Grundmaterial (101) aufweist.

3. Solarkollektor gemäß Anspruch 1 oder Anspruch 2, bei der das Grundmaterial (101) aus Aluminium besteht.

4. Solarkollektor gemäß einem der vorangegangenen Ansprüche, wobei die Oberfläche Komponenten elementaren Ti sowie Ti in einem Bindungszustand, beispielsweise TiO und/oder Nitrid, Ti in vierwertiger Form und Verbindungen, insbesondere K₂TiF₆, aufweist.

5. Solarkollektor gemäß einem der vorangegangenen Ansprüche, bei dem das Grundmaterial (101) Aluminium umfasst.

6. Solarkollektor gemäß einem der vorangegangenen Ansprüche, bei dem die lichtabsorbierende Oberfläche gemäß einem Verfahren gemäß einem der Ansprüche 7 bis 16 hergestellt ist.

7. Verfahren zur Herstellung eines Solarkollektors mit einer lichtabsorbierenden Oberfläche, nach einem der Ansprüche 1-5, das die folgenden Schritte umfasst:
Bereitstellen (201) eines Grundmaterials (101) mit einer Oberfläche;
Beschichten (203) der Oberfläche mit einer Schicht aus Titandioxid Nanopartikeln und einem Lötflussmittel auf der Basis von Kalium fluoroaluminaten.
Erhitzen (205) der Oberfläche, so dass die Schicht aus Nanopartikeln eine nanostrukturierte Schicht ausbildet, die in die Oberfläche integriert ist, um die lichtabsorbierende Oberfläche auszubilden.

8. Verfahren gemäß Anspruch 7, bei dem die Schicht aus Nanopartikeln und dem Lötflussmittel auf die Oberfläche aufgespritzt wird.

9. Verfahren gemäß Anspruch 7 oder 8, bei dem das Erhitzen der Oberfläche durch einen Lötprozess erfolgt.

10. Verfahren nach einem der Ansprüche 7 bis 9, bei dem das Erhitzen (205) unter Stickstoffatmosphäre erfolgt.

11. Verfahren gemäß einem der Ansprüche 7 bis 10, bei dem das Grundmaterial (101) aus Aluminium besteht.

12. Verfahren gemäß einem der Ansprüche 7 bis 11, bei dem die Titandioxid Nanopartikel dem Lötflussmittel zugesetzt sind.

13. Verfahren gemäß einem der Ansprüche 7 bis 12, bei dem die Schicht aus Nanopartikeln und dem Lötflussmittel weiterhin ein Bindemittel und ein Thixotrophiermittel umfasst.

14. Verfahren gemäß einem der Ansprüche 7 bis 13, bei dem die Schicht aus Nanopartikeln und dem Lötflussmittel ein Controlled Atmosphäre Brazing Flussmittel, eine Nanotitandioxid Suspension, eine Polyurethan-Bindemittel Suspension, eine Polyurethan-Verdicker Suspension und vollentionisiertes Wasser umfasst.

15. Verfahren gemäß einem der Ansprüche 7 bis Anspruch 14, bei dem die Schicht aus Nanopartikeln zu 25-40 % das CAB-Flussmittel, zu 10-20 % die Nanotitandioxid Suspension, zu 5-20% die PU-Bindemittel Suspension und zu 1-10 % die PU-Verdicker Suspension und zu 30-45% das vollentionisierte Wasser umfasst.

16. Verwendung einer in eine Gesamtfläche eines Grundmaterials integrieren Oberfläche, in die eine nanostrukturierte Schicht (103) aus Titandioxid Nanopartikeln und Bestandteilen eines Flussmittels welches Kaliumfluoroaluminate aufweist, integnert sind, zur Lichtabsorption eines Solarkollektors, oder zur Wärmeabstrahlung, wobei die Oberfläche gemäß einem Verfahren gemäß einem der Ansprüche 7 bis 15 hergestellt ist.

## Claims

1. A solar collector with a light-absorbing surface, having the following features:
a base material (101) with a surface;
a nanostructured layer (103), which is integrated in a total area of the surface of the base material (101) in order to form the light-absorbing surface, wherein the nanostructured layer (103) includes a flux to which titanium dioxide nanoparticles are added, wherein the flux includes potassium fluoroaluminates, in particular K₁₋₃AlF₄₋₈.

2. The solar collector according to claim 1, wherein the titanium dioxide has a greater degree of heat absorption than the base material (101).

3. The solar collector according to claim 1 or claim 2, wherein the base material (101) consists of aluminium.

4. The solar collector according to one of the preceding claims, wherein the surface includes components of elementary Ti and Ti in a bonding state, for example TiO and/or nitride, Ti in tetravalent form and compounds, in particular K₂TiF₆.

5. The solar collector according to one of the preceding claims, wherein the base material (101) comprises aluminium.

6. The solar collector according to one of the preceding claims, wherein the light-absorbing surface is produced according to a method according to one of claims 7 through 16.

7. A method for producing a solar collector with a light-absorbing surface according to one of claims 1 through 5 that comprises the following steps:
provision (201) of a base material (101) having a surface;
coating (203) the surface with a layer of titanium dioxide nanoparticles and a brazing flux on the basis of potassium fluoro-aluminates;
heating (205) the surface so that the layer of nanoparticles forms a nanostructured layer that is integrated in the surface in order to form the light-absorbing surface.

8. The method according to claim 7, wherein the layer of nanoparticles and the brazing flux is sprayed onto the surface.

9. The method according to claim 7 or 8, wherein the heating of the surface is accomplished by a soldering process.

10. The method according to one of claims 7 through 9, wherein the heating (205) is accomplished under nitrogen atmosphere.

11. The method according to one of claims 7 through 10, wherein the base material (101) consists of aluminium.

12. The method according to one of claims 7 through 11, wherein the titanium dioxide nanoparticles are added to the brazing flux.

13. The method according to one of claims 7 through 12, wherein the layer of nanoparticles and the brazing flux additionally includes a binder and a thixotropic agent.

14. The method according to one of claims 7 through 13, wherein the layer of nanoparticles and the brazing flux comprises a controlled atmosphere brazing flux, a nano-titanium dioxide suspension, a polyurethane binder suspension, a polyurethane thickener suspension, and fully deionised water.

15. The method according to one of claims 7 through 14, wherein the layer of nanoparticles is composed of 25-40% CAB flux, 10-20% nano-titanium dioxide suspension, 5-20% PU binder suspension and 1-10% PU thickener suspension, and 30-45% fully deionised water.

16. Use of a surface integrated in a total area of a base material in which a nanostructured layer (103) of titanium dioxide nanoparticles and components of a flux including potassium fluoro-aluminates is integrated, for the purpose of light absorption of a solar collector, wherein the surface is produced according to a method according to one of claims 7 through 15.

## Revendications

1. Collecteur solaire ayant une surface absorbant la lumière, ledit collecteur solaire ayant les caractéristiques suivantes :
un matériau de base (101) comportant une surface ;
une couche nanostructurée (103) qui est intégrée dans une surface d'ensemble de la surface du matériau de base (101), pour constituer la surface absorbant la lumière, où la couche nanostructurée (103) présente un fondant auquel ont été ajoutées des nanoparticules de dioxyde de titane, où le fondant présente des fluoroaluminates de potassium, en particulier le composé K₁₋₃AlF₄₋₈.

2. Collecteur solaire selon la revendication 1, où le dioxyde de titane présente un degré d'absorption de chaleur plus élevé que le matériau de base (101).

3. Collecteur solaire selon la revendication 1 ou la revendication 2, dans lequel le matériau de base (101) est en aluminium.

4. Collecteur solaire selon l'une quelconque des revendications précédentes, où la surface présente des composants de titane élémentaire ainsi que de titane dans un état de liaison, par exemple du TiO et / ou du nitrure, du titane sous une forme tétravalente et des composés, en particulier du K₂TiF₆.

5. Collecteur solaire selon l'une quelconque des revendications précédentes, dans lequel le matériau de base (101) contient de l'aluminium.

6. Collecteur solaire selon l'une quelconque des revendications précédentes, dans lequel la surface absorbant la lumière est réalisée conformément à un procédé selon l'une quelconque des revendications 7 à 16.

7. Procédé de fabrication d'un collecteur solaire ayant une surface absorbant la lumière selon l'une quelconque des revendications 1 à 5, lequel procédé comprend les étapes suivantes consistant :
à fournir (201) un matériau de base (101) ayant une surface ;
à recouvrir (203) la surface d'une couche de nanoparticules de dioxyde de titane et d'un fondant de brasage à base de fluoroaluminates de potassium ;
à chauffer (205) la surface, de sorte que la couche de nanoparticules forme une couche nanostructurée qui est intégrée dans la surface, pour constituer la surface absorbant la lumière.

8. Procédé selon la revendication 7, dans lequel la couche de nanoparticules et du fondant de brasage est appliquée par injection sur la surface.

9. Procédé selon la revendication 7 ou 8, dans lequel le chauffage de la surface est réalisé par un processus de brasage.

10. Procédé selon l'une quelconque des revendications 7 à 9, dans lequel le chauffage (205) se produit sous une atmosphère d'azote.

11. Procédé selon l'une quelconque des revendications 7 à 10, dans lequel le matériau de base (101) est en aluminium.

12. Procédé selon l'une quelconque des revendications 7 à 11, dans lequel les nanoparticules de dioxyde de titane sont ajoutées au fondant de brasage.

13. Procédé selon l'une quelconque des revendications 7 à 12, dans lequel la couche de nanoparticules et du fondant de brasage contient en outre un liant et un agent thixotrope.

14. Procédé selon l'une quelconque des revendications 7 à 13, dans lequel la couche de nanoparticules et du fondant de brasage contient un fondant de brasage sous atmosphère contrôlée, une suspension de dioxyde de titane nanoparticulaire, une suspension de liant de polyuréthane, une suspension d'épaississant de polyuréthane et de l'eau complètement désionisée.

15. Procédé selon l'une quelconque des revendications 7 à 14, dans lequel la couche de nanoparticules contient de 25 % à 40 % de fondant de brasage sous atmosphère contrôlée, de 10 % à 20 % de suspension de dioxyde de titane nanoparticulaire, de 5 % à 20 % de suspension de liant de polyuréthane, de 1 % à 10 % de suspension d'épaississant de polyuréthane et de 30 % à 45 % d'eau complètement désionisée.

16. Utilisation d'une surface intégrée dans une surface d'ensemble d'un matériau de base, surface dans laquelle sont intégrés une couche nanostructurée (103) de nanoparticules de dioxyde de titane et des composants d'un fondant qui présente des fluoroaluminates de potassium, ladite surface intégrée servant à l'absorption de lumière d'un collecteur solaire, ou bien à la dissipation de chaleur, où la surface absorbant la lumière est réalisée conformément à un procédé selon l'une quelconque des revendications 7 à 15.
